# FASCICULE DE BREVET EUROPEEN

(11) **EP 3 825 592 B1**
(45) Date de publication et mention de la délivrance du brevet: **06.09.2023**
(21) Numéro de dépôt: 20208080.0
(22) Date de dépôt: 17.11.2020
(51) Int. Cl.: F16K 31/06, F23N 1/00

(54) **ELECTROVANNE TROIS VOIES DEUX POSITIONS A RECOUVREMENT**
DREIWEGE-MAGNETVENTIL MIT ZWEI STELLUNGEN
THREE-WAY SOLENOID VALVE WITH TWO POSITIONS

(30) Priorité: 21.11.2019 FR 1913027
(43) Date de publication de la demande: 26.05.2021
(73) Titulaire: Circor Industria, 94420 Le Plessis Trevise (FR)
(72) Inventeur: CARRON, Patrick, 77340 Pontault Combault (FR); ROBERT, Pascal, 94430 Chennevieres sur Marne (FR)
(74) Mandataire: Duxbury, Stephen

(56) Documents cités:
- DE-B- 1 157 870
- FR-A- 1 300 561
- JP-U- S58 151 758
- US-B2- 9 285 051

## Description

La présente invention concerne une électrovanne trois voies deux positions à recouvrement.

Une électrovanne comporte deux parties : un actionneur électromagnétique et un corps avec des orifices obturables sélectivement par des organes d'obturation, par exemple des clapets ou des pointeaux. Le déplacement des organes d'obturation, d'une position d'ouverture à une position de fermeture de l'orifice auquel l'organe d'obturation est associé, est effectué sous l'action d'un champ magnétique généré par une mise en tension électrique d'une bobine.

Une électrovanne trois voies deux positions permet, par le déplacement des organes d'obturation, de mettre en communication ou non deux des trois orifices. Typiquement, deux orifices assurent, alternativement, une alimentation en fluides, liquide ou gaz, et un orifice assure la sortie du fluide, liquide ou gaz issu du mélange des fluides provenant des deux autres orifices. En ouvrant alternativement les organes d'obturation positionnés sur les orifices d'alimentation, on évite un mélange des deux fluides entrant. La fermeture ou l'ouverture sélective des orifices s'effectue, dans un type d'électrovanne, par un déplacement en translation de deux organes d'obturation. En général, une telle électrovanne comporte deux orifices parallèles et disposés perpendiculairement au troisième orifice. Ainsi, le mouvement des organes d'obturation permet de fermer deux des orifices ou d'en ouvrir un, selon un seul mouvement de déplacement en translation.

De telles électrovannes sont, par exemple, utilisées pour assurer l'alimentation en carburant et en air de moteurs. Il est ainsi possible d'éviter que les orifices d'alimentation en air et en carburant soient ouverts simultanément, ce qui nuirait au fonctionnement du moteur, l'alimentation de ce dernier étant alors trop riche ou trop pauvre en carburant.

US9285051 divulgue une vanne selon le préambule de la revendication 1.

A titre d'exemple, on connait par EP-A-2 479 520 un tel type d'électrovanne trois voies. Il s'avère néanmoins que, lors du déplacement en translation des organes d'obturation, il existe une position, certes avec une durée courte de l'ordre de la milliseconde, où un organe est positionné entre deux orifices. En conséquence, ces orifices ne sont pas complètement obturés, ce qui induit une mise en communication, certes partielle mais simultanée, des trois voies. Une telle situation, dans certains domaines techniques, peut être considérée comme étant potentiellement à risque et affectant un fonctionnement optimal du moteur. Il existe donc un besoin pour une électrovanne trois voies deux positions dans laquelle les organes d'obturation ne présentent à aucun moment une position susceptible de mettre en communication les trois orifices. US-B-9 285 051 a pour objet une électrovanne trois voies pour moteur de véhicule munie d'un stator et d'un rotor. Un élément mobile en translation et en rotation comprend deux parties coaxiales, montées coulissantes l'une dans l'autre qui assurent l'obturation par deux organes de deux des orifices de passage du fluide. JP-U-S58 151 758 divulgue une vanne pour le passage de fluide. Trois éléments sont coaxiaux et coulissants l'un dans l'autre. Les deux éléments de plus grandes dimensions sont cylindriques, creux et emboités l'un dans l'autre. Le dernier élément est une tige insérée dans l'élément. On obtient ainsi un déploiement de type télescopique des éléments.

C'est à ce besoin que se propose de remédier l'invention en proposant une électrovanne trois voies deux positions assurant une mise en communication uniquement de deux orifices simultanément, cela quels que soient les orifices et la position respective, à tout moment, des organes d'obturation par rapport aux orifices.

L'électrovanne de l'invention est définie par les caractéristiques de la revendication 1.

L'invention permet ainsi, avec une telle disposition des organes d'obturation sur deux parties de l'élément mobile, de fermer d'abord un orifice puis, dans un second temps, de fermer ou de laisser ouvert un autre orifice. Un tel montage induit que les déplacements des organes d'obturation ne peuvent qu'être que successifs et en aucun cas simultanés. Ainsi, il n'est pas possible d'avoir une position où les trois orifices sont simultanément en communication.

Selon des aspects avantageux mais non obligatoires de l'invention, une telle électrovanne peut comprendre une ou plusieurs des caractéristiques suivantes:
- Le manchon est maintenu en position dans le corps de l'électrovanne par un organe de guidage et la bague cylindrique.
- Une extrémité libre du cylindre plein ou noyau comprend une face conique adaptée pour obturer un orifice de l'électrovanne, ladite extrémité s'étendant à l'extérieur d'une extrémité libre du manchon.
- L'extrémité du cylindre plein ou noyau opposée à l'extrémité libre pourvue d'une face conique est fixée dans l'actionneur électromagnétique de l'électrovanne.
- L'extrémité libre du manchon par laquelle s'étend l'extrémité du cylindre plein ou noyau comprend des bords évasés radialement vers l'extérieur et adaptés pour obturer un passage du fluide entre deux des orifices.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig. 1] illustre une vue en coupe, simplifiée et partielle, d'une électrovanne trois voies deux positions conforme à un mode de réalisation de l'invention, dans une position dite de repos où une des trois voies est obturée,
[Fig. 2] est une coupe à plus grande échelle du détail II à la figure 1,
[Fig. 3] est une vue en coupe, similaire à la figure 1 et à la même échelle, de l'électrovanne dans une première position active dans laquelle deux des trois orifices sont fermés et
[Fig. 4] est une vue en coupe similaire à la figure 3 de l'électrovanne dans une seconde position active dans laquelle un des orifices fermés à la figure 3 est maintenant ouvert.

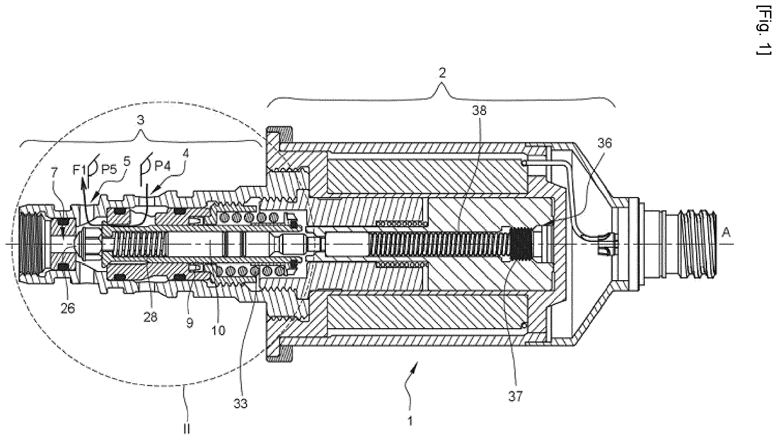

La figure 1 est une représentation d'une électrovanne 1, de type trois voies deux positions, conforme à un mode de réalisation de l'invention. Ici, l'électrovanne 1 est destinée à assurer l'alimentation en carburant et en air d'au moins un injecteur d'un moteur d'un aéronef. On conçoit que de tels moteurs fonctionnent dans diverses positions, selon la position de l'aéronef dans une représentation spatiale tridimensionnelle et cela avec des changements rapides de position. Il est donc nécessaire que l'alimentation en fluides, ici air et carburant, des injecteurs soit optimale, constante et sans aucun risque de disfonctionnement susceptible d'affecter le fonctionnement du moteur. L'électrovanne 1 comprend une partie 2 dite actionneur électromagnétique. Cette partie 2, visible à droite de la figure 1 est schématiquement illustrée. Elle comprend les moyens de commande, alimentés électriquement, de la partie active ou corps 3 de l'électrovanne 1. L'actionneur électromagnétique 2 ne sera pas détaillé ici, afin de faciliter la lecture.

Le corps 3 est, dans l'exemple, configuré en cylindre creux à base circulaire. Le corps 3 comprend trois orifices, reliés à des tubulures, non illustrées, assurant la circulation d'un fluide et reliées à l'extérieur et/ou à une autre partie du moteur. Deux orifices 4 et 5 assurent, respectivement, l'entrée et la sortie d'un fluide, ici le carburant alimentant les injecteurs du moteur. Comme cela ressort de la figure 1, les orifices 4 et 5 sont en forme de découpes annulaires ménagées sur la périphérie de la paroi externe 6 d'une zone du corps 3.

Les orifices 4 et 5 sont disposés de sorte que les directions de l'écoulement des fluides dans les orifices 4 et 5 sont parallèles. En l'espèce, compte tenu de la forme annulaire des orifices 4 et 5, les plans principaux P4 et P5 des orifices 4 et 5 sont parallèles. Ces plans P4 et P5 sont perpendiculaires à une direction d'écoulement du fluide dans un troisième orifice 7. Compte tenu de la configuration géométrique de l'électrovanne 1, cette direction est confondue avec un axe longitudinal principal A de l'électrovanne 1.

Ici, l'orifice 7 est circulaire et définit la tranche de l'extrémité libre du corps 3 de l'électrovanne 1. De la sorte, dans le mode de réalisation de l'invention illustré, le corps 3 est, d'une part, ouvert à une extrémité, avec un orifice 7 occupant au moins en partie la tranche d'extrémité et, d'autre part, entre l'orifice 7 et la partie 2, pourvu de deux autres orifices 4 et 5 ménagés sur la paroi externe 6 du corps 3. Dans l'exemple, L'orifice 4 est dédié à l'arrivée en carburant, l'orifice 7 à l'arrivée d'air et l'orifice 5 à la sortie du carburant donc à l'alimentation des injecteurs du moteur. Dans d'autres modes de réalisation, les orifices 4, 5 et 7 assurent le passage d'autres fluides, sachant que les orifices 4 et 7 sont des entrées et l'orifice 5 une sortie.

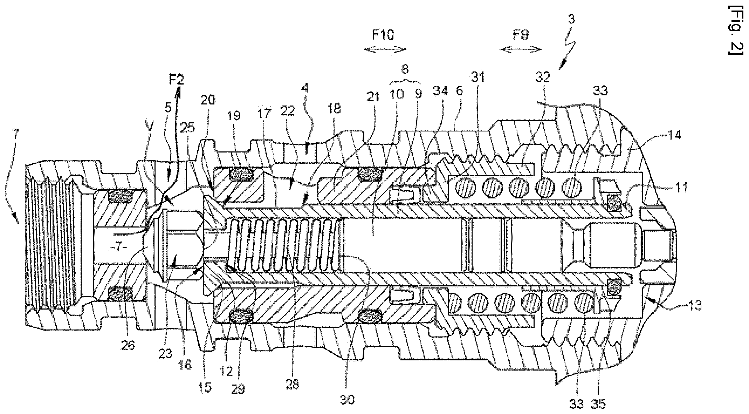

Le détail du corps 3 est maintenant décrit en référence à la figure 2. Le corps 3 reçoit dans son volume interne un élément mobile en translation 8. Cet élément 8, de par sa forme, sera par la suite désigné sous le terme de tige, pour faciliter la lecture. La tige 8, comme cela est particulièrement visible à la figure 2, est formée d'un manchon externe 9, cylindrique à base circulaire, et d'un organe cylindrique plein 10, inséré coaxialement dans le manchon 9. Le manchon est entièrement logé dans le corps 3. Ses extrémités 11 et 12 sont ouvertes. L'extrémité 11, particulièrement visible à droite de la figure 2, est située en regard d'une face 13 ménagée dans un élément de liaison 14 entre le corps 3 et l'actionneur électromagnétique 2. La face 13 définit une extrémité ouverte de l'élément de liaison 14. Les dimensions respectives de la face 13 et de l'extrémité 11 sont adaptées pour que la face 13 définisse une butée d'arrêt du mouvement en translation du manchon 9 en direction de l'actionneur électromagnétique 2.

L'extrémité ouverte 12, opposée à l'extrémité 11 et visible en partie gauche de la figure 2 est évasée. En d'autres termes, le bord circulaire 15 de l'ouverture circulaire 16 de l'extrémité 12 s'étend diamétralement vers l'extérieur, au-delà du diamètre nominal du manchon 9.

Le manchon 9 est pourvu, en amont de l'extrémité 12, d'un lamage externe 17 réalisé dans la paroi externe 18 du manchon 9 et s'étendant longitudinalement sur une partie de la paroi 18, en direction de l'extrémité 11 du manchon 9. Ainsi, on a un rétrécissement du diamètre externe du manchon 9 au niveau de l'extrémité 12 du manchon 9. La face arrière 19 du bord 15 forme une des extrémités du lamage 17. La face 19 est inclinée, définissant une extrémité 12 globalement en V.

Le manchon 9 est mobile en translation, selon la double flèche F9, selon une direction confondue avec l'axe longitudinal A de l'électrovanne 1, entre la butée 13 et une extrémité 20 d'un organe de guidage 21. L'organe de guidage 21 est une pièce cylindrique creuse insérée dans le corps 3 et entourant le manchon 9. L'organe 21 a un volume interne adapté pour autoriser le déplacement en translation du manchon 9 selon la double flèche F9, avec un jeu minima.

Une ouverture 22 est ménagée dans l'organe 21. Cette ouverture 22 est, dans l'exemple, circulaire. En variante elle est d'une autre forme. Le manchon 9 est positionné dans l'organe 21 de sorte que, quelle que soit la position du manchon lors de son déplacement en translation, une partie du lamage 17 est toujours en regard de l'ouverture 22.

Le cylindre plein 10 sera par la suite désigné par le terme de noyau. Il est mobile en translation dans le manchon 9 selon la double flèche F10. Le noyau 10 comprend une extrémité 23 particulièrement visible à gauche de la figure 2. Cette extrémité 23 est ici en forme de prisme hexagonal qui s'étend au-delà de l'ouverture 16 de l'extrémité 12. Les dimensions de la base 25 de l'extrémité 23 sont supérieures à celles de l'ouverture 16, de sorte que l'extrémité 23 est en permanence à l'extérieur du manchon 9, le bord 15 formant une butée au déplacement de l'extrémité 23 en direction de l'extrémité 11 du manchon. Dans un autre mode de réalisation, la forme de l'extrémité 23 est différente d'un prisme, par exemple c'est un polyèdre cubique.

La face libre 26 du prisme 23 n'est pas plane mais configurée pour obturer un orifice lorsque la face 26 est en contact avec l'orifice. Ici, la face 26 est de forme conique et avantageusement réalisée en un matériau souple et étanche au fluide circulant par ledit orifice, à la manière d'un pointeau. En variante non illustrée la configuration de la face libre 26 est différente et adaptée à l'orifice à obturer. Il peut s'agir par exemple d'une face plane ou sphérique.

La partie du noyau 10 située en permanence dans le manchon 9 est globalement cylindrique à base circulaire. Au moins un joint annulaire est monté autour du noyau 10, au niveau d'une zone de moindre diamètre. De la sorte, il y a étanchéité au fluide entre le noyau 10 et le manchon 9, sans que cela affecte le déplacement en translation du noyau 10 dans le manchon 9.

La partie du noyau 10 située en arrière de l'extrémité 12 du manchon 9 est de diamètre inférieur au reste du noyau. Cette partie est pourvue d'un ressort 28. Le ressort 28 entoure le noyau 10 et il est maintenu en position entre, d'une part, la face interne 29 de l'extrémité 12 et, d'autre part, la zone 30 de changement de diamètre entre les parties du noyau 10. Cette zone 30 est, en l'espèce, plane. Le ressort 28 est ainsi bloqué en translation et il définit un moyen de rappel en position de l'organe d'obturation défini par l'extrémité 23 et en particulier la face conique 26 de cette extrémité 23, d'un orifice, en l'occurrence, l'orifice 7.

Comme cela est particulièrement visible à la figure 2, l'organe de guidage 21 est maintenu en position entre, d'une part, une butée 31 formée par un rebord du corps 3 orienté vers l'intérieur et situé entre les orifices 4 et 5 et, d'autre part, une bague 32, cylindrique, ouverte aux extrémités et filetée sur l'extérieur. La bague 32 est vissée dans le corps 3, à proximité de la zone de liaison avec l'actionneur 2 de l'électrovanne. La bague 32 entoure le manchon 9 et elle a un volume interne supérieur à celui de l'organe de guidage 21. De la sorte, la bague 32 reçoit un ressort 33 entourant le manchon 9.

Le ressort 33 est maintenu en position entre une extrémité 34 de la bague 32 séparant la bague 32 de l'organe de guidage 21 et une butée en L, référencée 35. La butée 35 est mobile en translation dans la bague 32. Son déplacement est limité, d'une part par la position du ressort 33 lorsque ce dernier est comprimé ou détendu et, d'autre part, par la face 13 de l'élément de liaison entre le corps 3 et l'actionneur 2.

Le noyau 10 s'étend au-delà du corps 3 jusque dans l'actionneur 2, comme cela ressort des figures 1, 3 et 4. Le noyau 10 est fixé par une extrémité 36 au fond de l'actionneur 2 de l'électrovanne 1. Plus précisément, son extrémité 36 est positionnée dans un écrou de tarage 37. Cet écrou 37 permet de définir la force de rappel d'un ressort 38 entourant le noyau 10, sur la majeure partie de la longueur de ce dernier qui est insérée dans l'actionneur 2 de l'électrovanne 1. De la sorte, le ressort 38 assure le rappel en position de l'ensemble du noyau 10, ce dernier étant mobile en translation selon la double flèche F10.

Des joints assurent, de manière connue, l'étanchéité entre les divers éléments mobiles. Le fonctionnement de l'électrovanne 1 est maintenant décrit en référence aux figures 1, 3 et 4. Ces figures illustrent les positions principales occupées par l'électrovanne 1 lors de son fonctionnement. Il convient de garder à l'esprit que le passage d'une position à une autre est effectué en continu et de façon réversible, cela dans un laps de temps de l'ordre de quelques millisecondes.

La position illustrée à la figure 1 sera dénommée par la suite première position. Elle correspond à une position dite de repos où l'actionneur électromagnétique 2 n'est pas actif. Les ressorts 28, 33 et 38 sont détendus et n'exercent aucun effort induisant un déplacement en translation du manchon 9 et du noyau 10. Dans cette position, le bord 15 du manchon 9 est en appui étanche contre la face d'extrémité 20 de l'organe de guidage 21. Ainsi il n'y a pas de communication entre les orifices 4 et 5. Le bord 15 définit un organe d'obturation et empêche le passage du fluide par l'ouverture 22 et le lamage 17 qui permettent la communication entre l'orifice 4 et un volume libre V ménagé dans le corps 3 au niveau de l'extrémité 23 du noyau 10. Si l'on affecte aux orifices 4 et 5, respectivement une entrée et une sortie en carburant, cela induit qu'il n'y a pas de circulation de carburant dans l'électrovanne 1, selon la flèche F1 à la figure 1.

Dans la première position illustrée aux figures 1 et 2, la face 26 n'obture pas l'orifice 7. Le fluide peut donc circuler entre les orifices 5 et 7, par le volume V, selon la flèche F2, visible à la figure 2. Si l'orifice 7 assure l'entrée d'air, alors on connecte dans cette position le circuit d'air au circuit d'alimentation en carburant des injecteurs du moteurs.

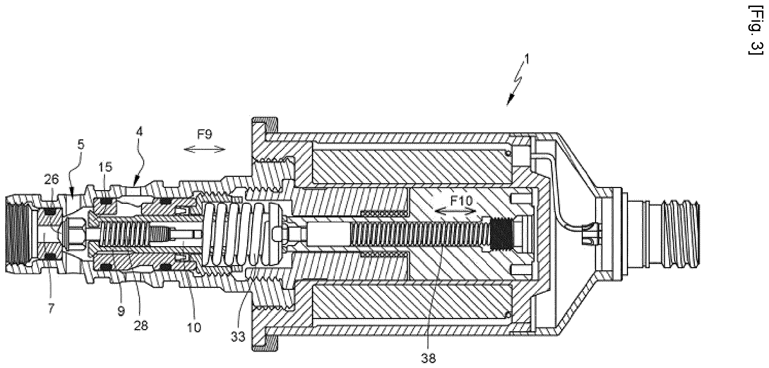

La position illustrée à la figure 3 sera dénommée seconde position. Il est à noter qu'il s'agit d'une position transitoire, la conception de l'électrovanne 1 ne permettant pas de maintenir cette position. Dans cette seconde position, l'actionneur électromagnétique 2 est mis en tension, ce qui va induire le déplacement du noyau 10. Apres un rattrapage des jeux fonctionnels, le déplacement du noyau 10 selon la double flèche F10 induit le déplacement de l'extrémité 23, donc de la face 26, en direction de l'orifice 7, tout en comprimant le ressort 28 de rappel de l'extrémité 23. Lors de ce mouvement, le noyau 10 se déplace librement dans le manchon 9, sans que ce dernier modifie sa position. En d'autres termes, le ressort 33 assure toujours l'immobilisation du manchon 9 et donc l'appui du bord 15 sur l'organe de guidage 21 et l'obturation du passage entre les orifices 4 et 5 par le bord 15 qui définit un organe d'obturation. Cette seconde position correspond à une phase dite de recouvrement dans le fonctionnement de l'électrovanne 1. Lors de cette phase de recouvrement, aucune circulation du fluide dans l'électrovanne 1 n'est possible, chaque orifice 4, 5 et 7 étant isolé des deux autres. L'étanchéité est totale, il n'y a aucun passage, même partiel, entre les orifices 4, 5 et 7 dans cette seconde position.

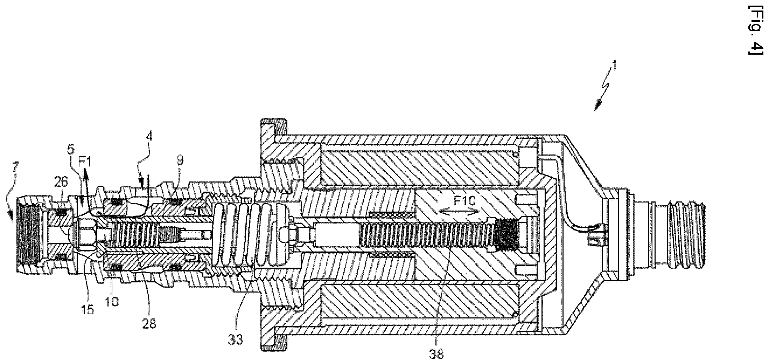

La figure 4 illustre une position dénommée troisième position. En poursuivant le déplacement selon la double flèche F10 du noyau 10 en direction de l'orifice 7, on génère le déplacement de la butée 35 selon la même direction F10. De la sorte, on comprime le ressort de rappel 33, ce qui permet le déplacement du manchon 9 dans le corps 3 selon la double flèche F9. Lors de ce déplacement, le bord 15 n'est plus en contact avec la face 20 de l'organe de guidage. Il y a alors mise en relation des orifices 4 et 5, un fluide pouvant circuler entre les deux orifices en passant par l'ouverture 22 et le lamage 17, selon la flèche F1. Comme l'appui étanche de la face 26 contre l'orifice 7 est maintenu, on maintient dans la troisième position la fermeture de l'entrée d'air tout en assurant une alimentation en carburant des injecteurs du moteur. 1

L'invention permet donc un déplacement séquentielle du noyau 10 puis du manchon 9, avec une obturation successive de deux, 7 puis 5, des orifices 4, 5 et 7, sachant qu'un, celui référencé 4, des orifices est toujours ouvert. Le rappel en position du manchon 9 et du noyau 10 s'effectue sous l'action de ressorts de rappel 28, 38.

En variante, le nombre de ressorts est différent, pour autant qu'un groupe de ressorts assure le rappel en position du manchon 9 et un autre groupe de ressorts le rappel en position du noyau 10. Dans tous les cas, le ou les ressort(s) assurant les rappels en position du manchon 9 et du noyau 10 n'ont pas le même tarage.

Grâce à l'invention, on dispose d'une électrovanne de construction simple, avec un encombrement similaire aux électrovannes de l'état de la technique, d'un fonctionnement aisé dans toutes les positions dans lesquelles se trouve l'électrovanne. Cette électrovanne 1 conforme à l'invention n'autorise que la communication au plus entre deux des trois orifices, sans aucune position intermédiaire où les trois orifices communiquent, à quel que moment que ce soit lors du déplacement de organes mobiles en translation.

## Revendications

1. Electrovanne (1) trois voies deux positions comportant un premier orifice (4) et un deuxième orifice (5) disposés de sorte que les directions d'écoulement (P4, P5) des fluides passant par ces orifices (4, 5) soient parallèles et un troisième orifice (7) disposé de sorte que la direction d'écoulement (A) du fluide passant par cet orifice (7) soit perpendiculaire aux directions d'écoulement (P4, P5) des fluides dans les deux autres orifices (4, 5), l'électrovanne (1) étant pourvue d'un corps (3) équipé d'un élément (8) mobile en translation selon une direction (A) parallèle à la direction d'écoulement du fluide dans le troisième orifice (7), ledit élément (8) mobile en translation étant équipé de deux organes d'obturation (15, 26), ledit élément (8) étant mobile en translation sous la commande d'un actionneur électromagnétique (2), l'élément mobile en translation comprenant au moins deux parties (9, 10) supportant chacune un organe d'obturation (15, 26), lesdites parties (9, 10) étant coaxiales et montées coulissantes l'une dans l'autre, l'élément (8) mobile en translation comprenant un manchon (9) entourant un cylindre plein et dénommé noyau (10), mobile en translation dans le manchon (9) qui est lui-même mobile en translation dans le corps (3) de l'électrovanne (1) selon des directions (F9, F10) parallèles à un axe longitudinal (A) de l'électrovanne (1), le rappel en position du cylindre plein ou noyau (10) dans le manchon (9) étant obtenu par au moins un ressort (28, 38) entourant ledit cylindre ou noyau (10), characterisée en ce que le rappel en position du manchon (9) est obtenu par au moins un ressort (33) entourant le manchon (9) et maintenu en position dans une bague cylindrique (32) et en ce que les ressorts (28, 33, 38) ont des tarages différents, celui du ressort (28) de rappel du cylindre ou noyau (10) étant inférieur à celui du ressort (33) de rappel du manchon (9) de sorte que le déplacement des organes d'obturation (15, 26) soit initialement celui (26) du noyau (10) puis celui (15) du manchon (9), avec une obturation successive du troisième orifice (7) puis du deuxième orifice (5) tandis que le premier orifice (4) est toujours ouvert.

2. Electrovanne selon la revendication 1, **caractérisée en ce que** le manchon (9) est maintenu en position dans le corps (3) de l'électrovanne (1) par un organe de guidage (21) et la bague cylindrique (32).

3. Electrovanne selon la revendication 1, **caractérisée en ce qu'**une extrémité libre (23) du cylindre plein ou noyau (10) comprend une face conique (26) adaptée pour obturer un orifice (7) de l'électrovanne (1), ladite extrémité (23) s'étendant à l'extérieur d'une extrémité libre (12) du manchon (9).

4. Electrovanne selon la revendication 3, **caractérisée en ce que** l'extrémité (36) du cylindre plein ou noyau (10) opposée à l'extrémité libre (23) pourvue d'une face conique (26) est fixée dans l'actionneur électromagnétique (2) de l'électrovanne (1).

5. Electrovanne selon l'une des revendications précédentes, **caractérisée en ce que** l'extrémité libre (12) du manchon (9) par laquelle s'étend l'extrémité (23) du cylindre plein ou noyau (10) comprend des bords évasés (15) radialement vers l'extérieur et adaptés pour obturer un passage (F1) du fluide entre deux (4, 5) des orifices (4, 5, 7).

## Patentansprüche

1. Dreiwege-Magnetventil (1) mit zwei Positionen, umfassend einen ersten Anschluss (4) und einen zweiten Anschluss (5), die so angeordnet sind, dass die Strömungsrichtungen (P4, P5) der durch diese Anschlüsse (4, 5) strömenden Fluide parallel sind, und einen dritten Anschluss (7), der so angeordnet ist, dass die Strömungsrichtung (A) des durch diesen Anschluss (7) strömenden Fluids senkrecht zu den Strömungsrichtungen (P4, P5) der Fluide in den beiden anderen Anschlüssen (4, 5) verläuft, wobei das Magnetventil (1) mit einem Körper (3) versehen ist, der mit einem Element (8) ausgestattet ist, das entlang einer Richtung (A) parallel zur Strömungsrichtung des Fluids in dem dritten Anschluss (7) verschiebbar ist, wobei das verschiebbare Element (8) mit zwei Dichtungselementen (15, 26) ausgestattet ist, wobei das Element (8) unter der Steuerung eines elektromagnetischen Aktuators (2) verschiebbar ist, wobei das verschiebbare Element mindestens zwei Teile (9, 10) umfasst, die jeweils ein Dichtungselement (15, 26) tragen, wobei die Teile (9, 10) koaxial zueinander und ineinandergleitend gelagert sind, wobei das verschiebbare Element (8) eine Hülse (9) umfasst, die einen massiven Zylinder, auch Kern (10) genannt, umgibt, welcher in der Hülse (9) verschiebbar ist, die wiederum in dem Körper (3) des Magnetventils (1) entlang Richtungen (F9, F10) parallel zu einer Längsachse (A) des Magnetventils (1) verschiebbar ist, wobei die Rückkehr des massiven Zylinders oder Kerns (10) in seine Position in der Hülse (9) durch mindestens eine Feder (28, 38) erreicht wird, die den Zylinder oder Kern (10) umgibt, **dadurch gekennzeichnet, dass** die Rückkehr der Hülse (9) in ihre Position durch mindestens eine Feder (33) erreicht wird, die die Hülse (9) umgibt und in einem zylindrischen Ring (32) in Position gehalten wird, und dadurch, dass die Federn (28, 33, 38) unterschiedliche Federraten aufweisen, wobei die Feder (28) zum Zurückbringen des Zylinders oder Kerns (10) in seine Position eine geringere Federrate aufweist als die Feder (33) zum Zurückbringen der Hülse (9) in ihre Position, so dass die Bewegung der Dichtungselemente (15, 26) zunächst die (26) des Kerns (10) ist, dann die (15) der Hülse (9), und nacheinander den dritten Anschluss (7) und dann den zweiten Anschluss (5) abdichtet, während der erste Anschluss (4) offen bleibt.

2. Magnetventil nach Anspruch 1, **dadurch gekennzeichnet, dass** die Hülse (9) durch ein Führungselement (21) und den Zylinderring (32) in dem Körper (3) des Magnetventils (1) in ihrer Position gehalten wird.

3. Magnetventil nach Anspruch 1, **dadurch gekennzeichnet, dass** ein freies Ende (23) des massiven Zylinders oder Kerns (10) eine konische Fläche (26) aufweist, die zum Abdichten eines Anschlusses (7) des Magnetventils (1) geeignet ist, wobei sich das Ende (23) außerhalb eines freien Endes (12) der Hülse (9) erstreckt.

4. Magnetventil nach Anspruch 3, **dadurch gekennzeichnet, dass** das Ende (36) des massiven Zylinders oder Kerns (10), das dem mit einer konischen Fläche (26) versehenen freien Ende (23) gegenüberliegt, in dem elektromagnetischen Aktuator (2) des Magnetventils (1) befestigt ist.

5. Magnetventil nach einem der vorhergehenden Ansprüche, **dadurch gekennzeichnet, dass** das freie Ende (12) der Hülse (9), durch das sich das Ende (23) des massiven Zylinders oder Kerns (10) erstreckt, radial nach außen aufgeweitete Kanten aufweist (15), die geeignet sind, einen Durchgang (F1) des Fluids zwischen zwei (4, 5) der Anschlüsse (4, 5, 7) abzudichten.

## Claims

1. A three-way, two-position solenoid valve (1) including a first port (4) and a second port (5) arranged so that the directions of flow (P4, P5) of the fluids flowing through these ports (4, 5) are parallel, and a third port (7) arranged so that the direction of flow (A) of the fluid flowing through this port (7) is perpendicular to the directions of flow (P4, P5) of the fluids in the two other ports (4, 5), wherein the solenoid valve (1) is provided with a body (3) equipped with an element (8) that is linearly movable along a direction (A) parallel to the direction of flow of the fluid in the third port (7), wherein said linearly movable element (8) is equipped with two sealing members (15, 26), said element (8) being linearly movable under the control of an electromagnetic actuator (2), said linearly movable element including at least two parts (9, 10) each supporting a sealing member (15, 26), wherein said parts (9, 10) are coaxial with each other and are mounted so as to slide one inside the other, wherein the linearly movable element (8) includes a sleeve (9) surrounding a solid cylinder also called core (10), linearly movable in the sleeve (9) which is itself linearly movable in the body (3) of the solenoid valve (1) along directions (F9, F10) parallel to a longitudinal axis (A) of the solenoid valve (1), wherein the return to position of the solid cylinder or core (10) in the sleeve (9) is achieved through at least one spring (28, 38) surrounding said cylinder or core (10), **characterised in that** the return to position of the sleeve (9) is achieved through at least one spring (33) surrounding the sleeve (9) and held in position in a cylindrical ring (32), and **in that** the springs (28, 33, 38) have different rates, the spring (28) for returning the cylinder or core (10) to position having a smaller rate than the spring (33) for returning the sleeve (9) to position, so that the movement of the sealing members (15, 26) is initially that (26) of the core (10), then that (15) of the sleeve (9), sequentially sealing the third port (7), then the second port (5), while the first port (4) remains open.

2. The solenoid valve according to claim 1, **characterised in that** the sleeve (9) is held in position in the body (3) of the solenoid valve (1) by a guiding member (21) and the cylindrical ring (32).

3. The solenoid valve according to claim 1, **characterised in that** a free end (23) of the solid cylinder or core (10) includes a conical face (26) adapted to seal a port (7) of the solenoid valve (1), said end (23) extending outside a free end (12) of the sleeve (9).

4. The solenoid valve according to claim 3, **characterised in that** the end (36) of the solid cylinder or core (10) opposite the free end (23) that is provided with a conical face (26) is fixed in the electromagnetic actuator (2) of the solenoid valve (1).

5. The solenoid valve according to any of the preceding claims, **characterised in that** the free end (12) of the sleeve (9) through which the end (23) of the solid cylinder or core (10) extends includes radially outwardly flared edges (15) that are adapted to seal off a passage (F1) of the fluid between two (4, 5) of the ports (4, 5, 7).
